# EUROPÄISCHE PATENTSCHRIFT

(11) **EP 3 307 466 B1**
(45) Veröffentlichungstag und Bekanntmachung des Hinweises auf die Patenterteilung: **22.05.2019**
(21) Anmeldenummer: 16739397.4
(22) Anmeldetag: 25.05.2016
(51) Int. Cl.: B23D 25/12, B23D 33/02, B65H 19/00, B21B 15/00

(54) **VERFAHREN ZUM ABTRENNEN VON EINZELSTÜCKEN MIT EINER WEICHE HINTER EINER TROMMELSCHERE**
METHOD FOR CUTTING WORKPIECES COMPRISING A SWITCH POINT AFTER A DRUM MOUNTED WITH BLADES
PROCEDE DE DECOUPAGE DE PIECES COMPRENANT UN AIGUILLAGE APRES DES LAMES MONTEES SUR UN TAMBOUR

(30) Priorität: 12.06.2015 DE 102015210843; 26.11.2015 DE 102015015521
(43) Veröffentlichungstag der Anmeldung: 18.04.2018
(73) Patentinhaber: SMS group GmbH, 40237 Düsseldorf (DE)
(72) Erfinder: RUNKEL, Thomas, 57074 Siegen (DE)
(74) Vertreter: Klüppel, Walter
(86) Internationale Anmeldenummer: PCT/DE2016/100241
(87) Internationale Veröffentlichungsnummer: WO 2016/198041

(56) Entgegenhaltungen:
- EP-A1- 0 655 291
- WO-A1-2007/003331
- DE-A1- 1 452 068
- DE-A1- 2 720 136
- DE-A1- 3 020 084
- GB-A- 2 075 900
- TW-B- I 296 946
- US-A- 3 688 621
- US-A- 3 834 260
- US-A- 5 857 370

## Beschreibung

Die Erfindung betrifft ein Verfahren zum Abtrennen von Einzelstücken gemäß dem Oberbegriff des Anspruchs 1. Ein solches Verfahren ist bekannt aus EP5857370A.

Für Metallbänder, die mit einer Geschwindigkeit von bis zu ca. 0,5 m/s laufen, sind Scherentypen bekannt (z.B. Pendelscheren), die sowohl am Kopf eines Bandes schneiden (schopfen) können, als auch aus dem durchlaufenden Band mehrere Stücke herausschneiden können (Häckseln) und in beiden Fällen in der Lage sind, den nachfolgenden, neuen Kopf sicher weiter zu transportieren. Durch die Entkopplung von Schnittbewegung (vertikal) und Messermitlauf (horizontal) können relativ kurze Häckselstücke geschnitten werden. Die Länge der Stücke beträgt typischerweise 500 mm. Damit ist die erforderliche Öffnung für den Schrottkanal für das Abfallen der Häckselstücke nach unten kurz und nur etwas länger als die Stücklänge (hier 500 mm).

Bei Material-Geschwindigkeiten von über ca. 0,5 m/s werden andere Scherentypen eingesetzt (Z.B. Trommelscheren). Bei diesen Scheren wird die Länge der Häckselstücke vom Durchmesser der Trommel, der Anzahl der Messer auf der Trommel und der Antriebssteuerung bestimmt. Wird beispielsweise bei den üblichen Banddicken in einem Warmwalzwerk aufgrund der Schnittkräfte ein Trommeldurchmesser von 700 bis 1.100 mm erforderlich, weisen die Häckselstücke typischerweise eine Länge von 750 bis über 2.000 mm auf. Dies erfordert eine längere Öffnung für das herabfallende Häckselstück, über die der nachfolgende, neue Bandkopf - insbesondere bei dünnen Bändern - nicht betriebssicher weitergeleitet werden kann.

Die bekannten Lösungen für Trommelscheren können bei dünnen Bändern am Bandkopf nur entweder
a) mit einer kurzen Öffnung für den Schrottkanal ein Schopfstück schneiden und den nachfolgenden, neuen Kopf überleiten für die weitere Verarbeitung oder
b) mit einer langen Öffnung für den Schrottkanal Häckselstücke abschneiden und sind dann nicht in der Lage, den nachfolgenden, neuen Kopf für die weitere Verarbeitung überzuleiten.

Kurz gesagt: eine Kombination von Schopfen und Häckseln bei anschließenden Durchlaufbetrieb mit einer einzelnen Schere ist nicht möglich.

Dieses Problem wird mit dem erfindungsgemäßen Verfahren gemäß Anspruch 1 gelöst. Vorzugsweise Ausgestaltungen ergeben sich aus den Unteransprüchen und werden nachfolgend erläutert.

Die Erfindung kann angewendet werden zum Abtrennen einer beliebigen Anzahl von Einzelstücken am Anfang oder in der Mitte eines durchlaufenden Materials, insbesondere bei Transport Geschwindigkeiten von über ca. 0,5 m/s.

Insbesondere kann die Erfindung genutzt werden zum Bearbeiten von Metallbändern in Warmwalzanlagen.

Beim Auswalzen des Materials entsteht ein mehr oder weniger stark ausgeprägter unregelmäßiger Bandkopf und Bandfuß. Dies kann in nachfolgenden Walzstichen Produktionsstörungen hervorrufen. Daher wird in der Regel zwischen einer Abfolge von Walzstichen der unregelmäßige Kopf und Fuß abgetrennt (geschopft). Dann ist Kopf und Fuß wieder annähernd begradigt. Spezielle Schopfoptimierungssysteme ermitteln anhand der Kopfkontur die kürzestmögliche Länge für das als Schrott anzusehende Schopfstück, damit Produktionsabfall minimiert ist. Die maximale Länge eines Schopfstückes beträgt typischerweise 500 mm. Für diese Länge ist der in Materiallaufrichtung hinter der Schere befindliche, nach unten offene Schrottkanal ausgelegt, in dem das Schopfstück aufgrund der Schwerkraft herunter fällt und vom einem Schrottsystem aufgenommen wird. Das Schrottsystem besteht üblicherweise aus einer oder mehreren Schrottrutschen und einem oder mehreren Schrottkübeln.

Der nachfolgende, neue Materialkopf muss weitgehend ohne Unterstützung über den Schrottkanal gelangen und darf nicht anstoßen oder zu weit nach unten abgelenkt sein. Durch die aufgrund der Schwerkraft natürliche Biegung bestehen hier insbesondere bei dünnen Bändern Restriktionen für die Länge des Schrottkanals, da ein dünneres Band sich eher nach unten neigt und damit die Länge des Schrottkanals begrenzt ist.

Ein besonderes Einsatzgebiet der Erfindung ist bei einer kontinuierlichen Gieß-Walzanlage, in der im Voll-Konti-Prozess in der Gießvorrichtung aus flüssigem Metall ein Strang erzeugt wird, der im nachfolgenden Fertigwalzwerk zu Warmband ausgewalzt wird. Die Unterteilung in Coillängen erfolgt erst kurz vor dem Aufwickelhaspel. Wenn beabsichtigt oder unbeabsichtigt eine Unterbrechung des Walzbetriebs im Fertigwalzwerk stattfindet, kann die vorliegende Erfindung Anwendung finden, indem aus kontinuierlich laufenden Metallband Einzelstücke beliebiger Anzahl heraus geschnitten (gehäckselt) werden können oder das im Produktionsprozess noch befindliche Metallband am Materialkopf, innerhalb des Bandmaterials oder komplett in Einzelstücke unterteilt (gehäckselt) wird. Somit kann in einer kontinuierlichen Gieß-Walzanlage eine Trennung zwischen der Gießanlage und oder innerhalb der Walzanlage durchgeführt werden, durch die herausgetrennte Materiallänge kann die Gießanlage bei Ausfördern des Strangs leergefahren werden und ein sofortiger Gießstopp wird verhindert. Die Häckselstücke sind typischerweise 700 bis 2.000 mm lang und erfordern eine entsprechend lange Schrottkanalöffnung. Über diese lange Öffnung des Schrottkanals können dünne Bänder nicht ohne eine weitere Vorrichtung geleitet werden.

Die Erfindung bietet eine Lösung für Trommelscheren für eine Material Geschwindigkeit von über ca. 0,5 m/s bis zu ca. 3 m/s. Als dünne Bänder werden heiße Metallbänder mit einer Dicke unter 20 mm angesehen, die sich aufgrund des Eigengewichtes hinter der Schere nach unten biegen. Dadurch stößt der neue Materialkopf im nachfolgenden Schrottkanal an oder wird nach unten in den Schrottkanal geleitet. anstatt - wie gewünscht - zum Durchlaufbetrieb auf die hinter der Schere liegenden Rollen weitergeleitet zu werden.

Mit der Erfindung wird die Möglichkeit eröffnet, mit ein und derselben Schneidvorrichtung
a) den Kopf eines laufenden Metallbandes zu schopfen mit einem Stück kurzer Länge (typischerweise 40 - 500 mm) und
b) am Kopf eines laufenden Metallbandes eine beliebige Anzahl Einzelstücke definierter Länge (typischerweise 700 - 2.000 mm) zu häckseln und
c) weiterhin ist es mit der Erfindung möglich, aus einem kontinuierlich laufenden Metallband eine
   beliebige Anzahl von Einzelstücken herauszuschneiden und
d) weiterhin ist es mit der Erfindung möglich, Metallbänder komplett oder teilweise zu häckseln.

Wesentlicher Zweck der Erfindung ist die Integration der oben genannten Möglichkeiten in Verbindung mit einer einzelnen fliegenden Schere. Der Kern der Erfindung liegt in einem Vorschlag, wie der neue Bandkopf betriebssicher über die notwendige Öffnung des Schrottkanals geleitet werden kann.

Die Anzahl der Häckselstücke wird nur durch die Aufnahmekapazität des Schrottsystems begrenzt.

Das Problem der Überleitung von dünnen Bändern über einen für Häckselstücke ausreichend langen Schrottkanal soll gelöst werden.

Wesentlicher Zweck der Erfindung ist ein Verfahren zur Überleitung des Bandkopfes nach einer einzelnen Trommelschere bei dünnen Bändern unter Integration der Funktionen Bandkopf Schopfen und Bandteile Häckseln (siehe Anlage 1).

Wesentlich ist eine schwenkbare Weiche hinter der fliegenden Schere, die so geschwenkt werden kann, dass eine Kombination mehrerer Schneidverfahren möglich wird, wobei
a) beim Schopfen am Materialkopf die Öffnung in den Schrottkanal verringert wird und der neue Bandkopf über den Schrottkanal zum Durchlaufbetrieb geleitet wird (Anlage 2) und
b) beim Häckseln die Öffnung über den Schrottkanal vergrößert und das Häckselstück nach unten in den Schrottkanal geleitet wird (Anlage 4) und
c) nach Abschluss des Häckselvorganges durch Verringerung der Öffnung des Schrottkanals der neue Bandkopf wieder über den Schrottkanal zum Durchlaufbetrieb geleitet wird (Anlage 3). Die Verringerung der Öffnung des Schrottkanals erfolgt dynamisch in zeitlicher Abhängigkeit vom Schnittvorgang und wird von einem Automationssystem gesteuert. Der Verringerung der Öffnung erfolgt, sobald der Anfang des Häckselstückes die Weichenzunge passiert hat und bevor der neue Materialanfang die Weiche erreicht. Diese Häcksel-Verfahren kann auch am einlaufenden Materialkopf anstelle des Schopfens angewendet werden.
d) Es kann auch aus einem durchlaufenden Materialstrang Material herausgeschnitten werden. Der durchlaufende Materialstrang wird aufgetrennt, es werden Häckselstücke hausgeschnitten und - wenn gewünscht - kann der neue Materialkopf wieder im Durchlaufbetrieb weitergeleitet werden (Anlage 5). Andernfalls wird der Materialstrang bis zum Ende gehäckselt.
   Bestandteil der Erfindung ist somit ein Verfahren zur Steuerung der Weiche in Abhängikeit von der gewünschten Betriebsweise, insbesondere für die Phase des Übergangs von Häckseln in erneuten Durchlaufbetrieb.
   Mit Hilfe des zusätzlich möglichen schwenkbaren Einlauftisches und Einlauftreibers ergeben sich folgende weitere Möglichkeiten:
e) Soll der Materialstrang am Ende geschopft werden, bleibt die bewegliche Weiche in Durchlaufstellung (Anlage 6). Der Einlauftreiber erlaubt, dass das Material - zumindest bis das Materialende den Treiber verlassen hat - in die Schere zu bewegen. Der schwenkbare Einlauftisch verhindert ein Herunterfallen des Materialendes - insbesondere bei dünnen Bändern. Aufgrund der Materialgeschwindigkeit und der Messerbewegung wird das Materialende sich noch vom Treiber wegbewegen. Spätestens kurz oder nach dem letzten Schnitt wird der schwenkbare Einlauftisch nach unten geschwenkt. f) Ähnlich ist das Verfahren, wenn am Materialende nur geschopft werden soll (Anlage 7).

Nach einer vorzugsweisen Ausgestaltung der Erfindung ist ein
Einlauftreiber zum Transport des Materials, insbesondere wenn das durchlaufende Material vollständig bis zum Ende gehäckselt werden soll, vorgesehen.

Weiterhin kann ein schwenkbarer Einlauftisch im Schereneinlauf zur Überleitung des Materialkopfes und Materialendes in die Schere, sowie ein Zwischenbeschleunigen und -verzögern der Messertrommeln der Trommelschere zwischen den Häckselschnitten zur Verringerung der Länge der Häckselstücke, vorgesehen sein.
d) Einsatz von mehr als einem Messerpaar in der Schere zur Verringerung der Länge der Häckselstücke.
e) Ein Auslauftreiber zum Ziehen des Materialkopfes aus der Schere.
f) Eine Ausbildung der unteren Messertrommel in der Form, dass der neue Materialkopf von der Messertrommel unterstützt wird.
g) es kann für einen besseren Materialtransport vorteilhaft sein, die auslaufseitige Rolle horizontal und/oder vertikal verstellbar auszuführen.

Die Erfindung erlaubt es, mit einer Einrichtung sowohl am Materialanfang ein kurzes Schopfstück abzutrennen, als auch mit der gleichen Einrichtung Häckselstücke am Materialkopf oder aus dem laufenden Band zu schneiden.

Wesentlich ist die Möglichkeit, in allen Fällen betriebssicher den neuen Materialkopf nach dem Schnitt über den Schrottkanal zu leiten und in den Durchlaufbetrieb überzugehen.

### Legende zu den Zeichnungen

### Anlage 1 Prinzipdarstellung

| | | | |
|---|---|---|---|
| 1 | Trommelschere | 7 | Materiallaufrichtung |
| 2 | Schnittmesser | 8 | Schwenkbare Weiche |
| 3 | Einlauftreiber | 9 | Auslauftreiber |
| 4 | Schwenkbarer Einlauftisch | 10 | Rolle |
| 5 | Rolle | 11 | Schrottkanal Auslauf |
| 6 | Schrottkanal Einlauf | | |
| | | | |
| a | Weiche in Durchlaufstellung | | |
| b | Weiche in Schopfstellung | | |
| c | Weiche in Häckselstellung | | |

### Anlage 2 Prinzipdarstellung Schopfen am Materialanfang und Überleitung des neuen Materialkopfes (Schrottkanalöffnung verkleinert)

| | | | |
|---|---|---|---|
| 12 | Neuer Materialanfang | 14 | Herabfallendes Schopfstück |
| 13 | Weiche in Stellung für Schöpfen | | |
| | | | |
| a | Schopfschnitt am Materialkopf | | |
| b | Überleitung des neuen Materialanfangs | | |
| c | Durchlaufendes Materialanfang | | |

### Anlage 3 Prinzipdarstellung Häckseln mit Überleitung eines neuen Materialkopfes (Schrottkanalöffnung Auslauf veränderlich)

| | | | |
|---|---|---|---|
| 15 | Weiche in Stellung für Häckseln | 16 | Herabfallendes Häckselstück |
| | | | |
| a | Weiche positionieren | | |
| b | Abtrennen des ersen Häckselstücks | | |
| c | Abtrennen weiterer Häckselstücke | | |
| d | Abtrennen des letzten Häckselstücks und dynamisches Schließen der Weiche | | |
| e | Dynamisches Schließen der Weiche und Überleitung des neuen Materialanfangs | | |
| f | Durchlaufendes Material | | |

### Anlage 4 Prinzipdarstellung Häckseln ohne Überleitung eines neuen Materialkopfes (Schrottkanalöffnung Auslauf vergrößert)

- 17: Weiche in Stellung für Häckseln
- 18: Herabfallendes Häckselstück

- a: Weiche positionieren
- b: Abtrennen des ersten Häckselstücks
- c: Abtrennen eines weiteren Häckselstücks

### Anlage 5 Prinzipdarstellung Häckseln eines durchlaufenden Material und Überleitung des neuen Materialkopfes (Schrottkanalöffnung Auslauf veränderlich)

- a: Durchlaufendes Materialanfang
- b: Durchtrennen des Materials
- c: Dynamisches Öffnen der Weiche für Häckseln
- d: Abtrennen des ersten und weiterer Häckselstücke
- e: Abtrennen des letzten Häckselstücks und dynamisches Schließen der Weiche
- f: Dynamisches Schließen der Weiche und Überleiten des neuen Materialanfangs
- g: Durchlaufendes Material

### Anlage 6 Prinzipdarstellung Schopfen am Materialende

- 19: Einlauftreiber zum Transport des Materialendes
- 20: Schwenkbarer Einlauftisch Wird spätestens beim letzten Schnitt nach unter geschwenkt
- 21: Herabfallendes Schopfstück
- a: Durchlaufendes Materialanfang
- b: Schopfschnitt am Materialfuß
- c: Herabfallendes Schopfstück

### Anlage 7 Prinzipdarstellung Häckseln am Materialendes

- a: Durchlaufendes Material
- b: Dynamisches Öffnen der Weiche für Häckseln
- c: Abtrennen des ersten (und weiterer) Häckselstücke
- d: Abtrennen des letzten Häckselstücks und Schopfstückes
- e: Herabfallen des Schopf- und Häckselstückes

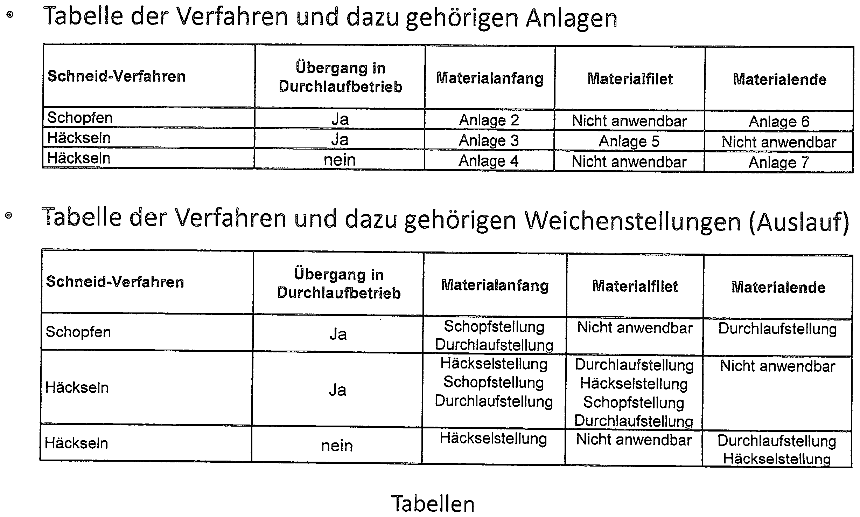

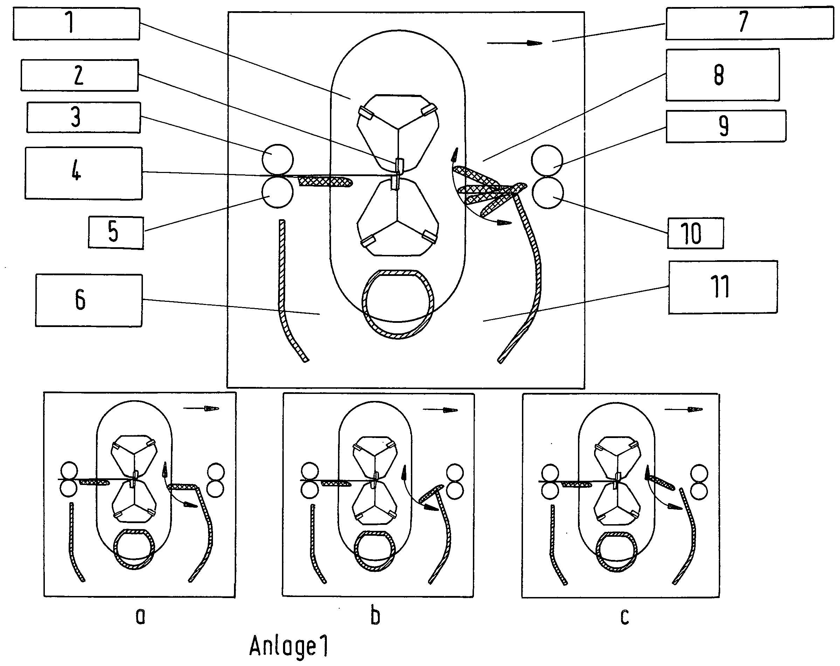

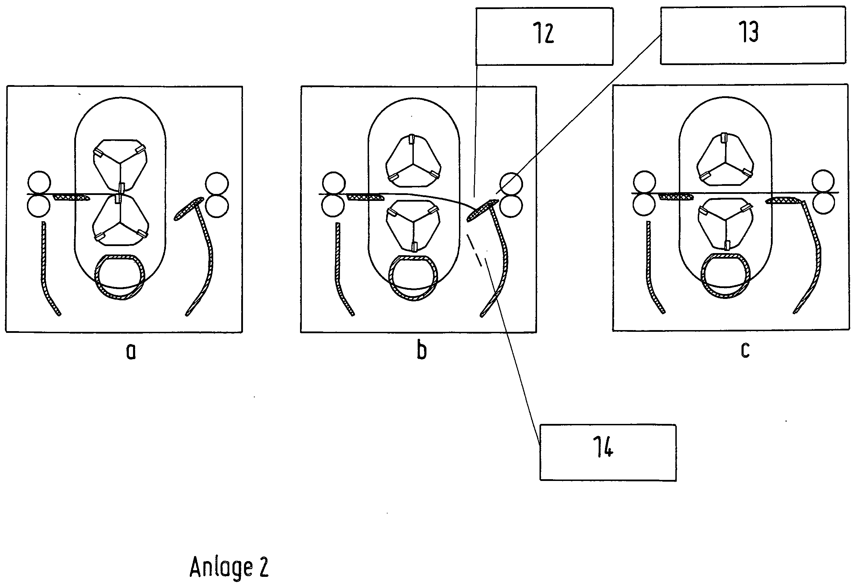

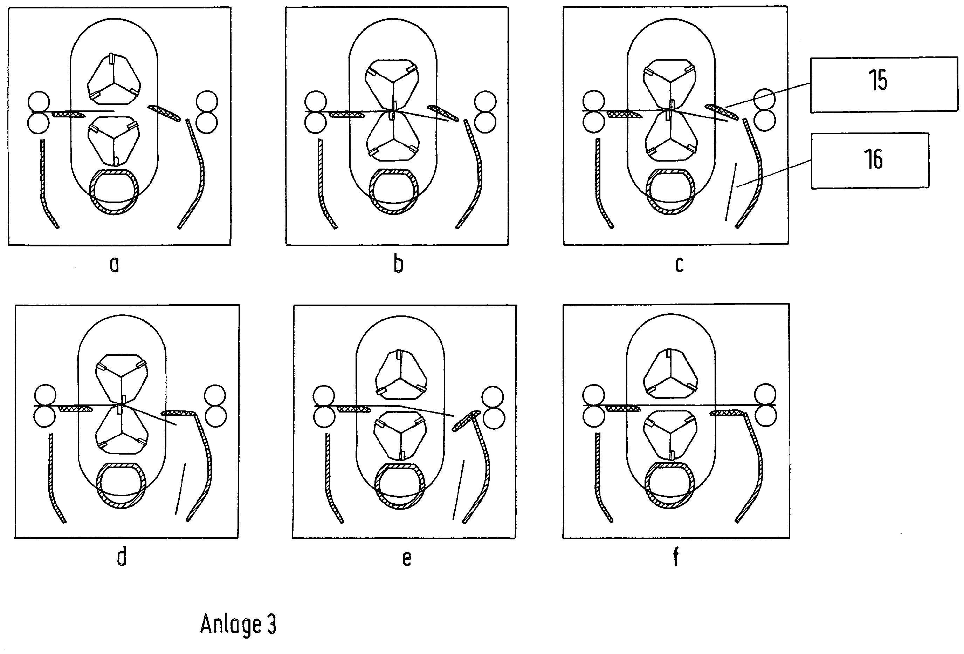

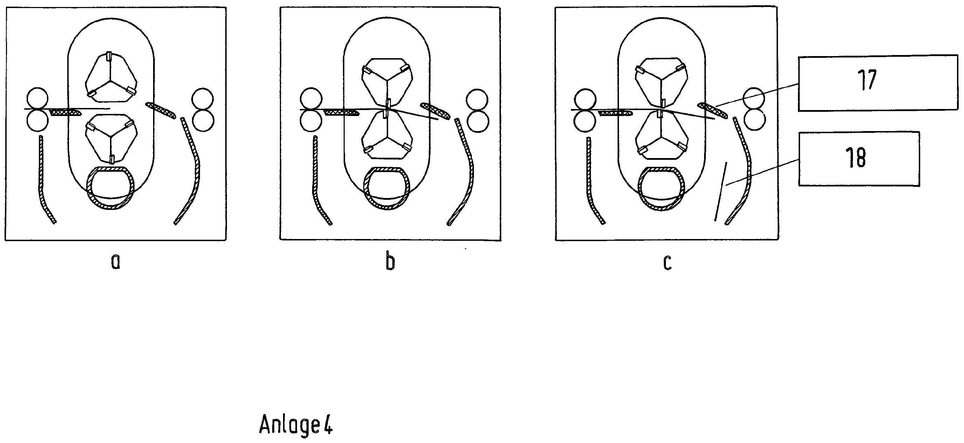

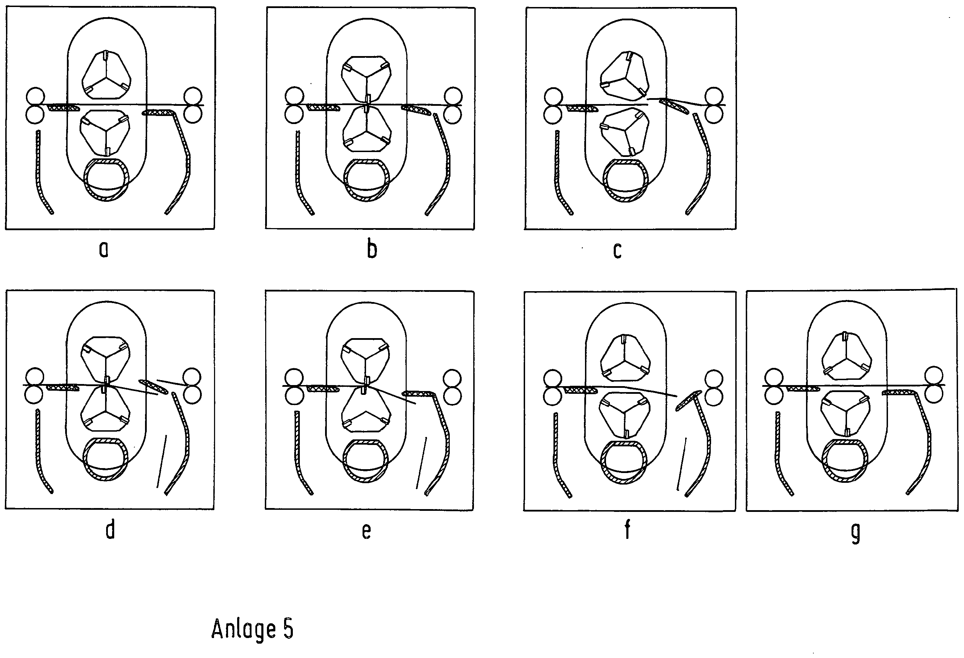

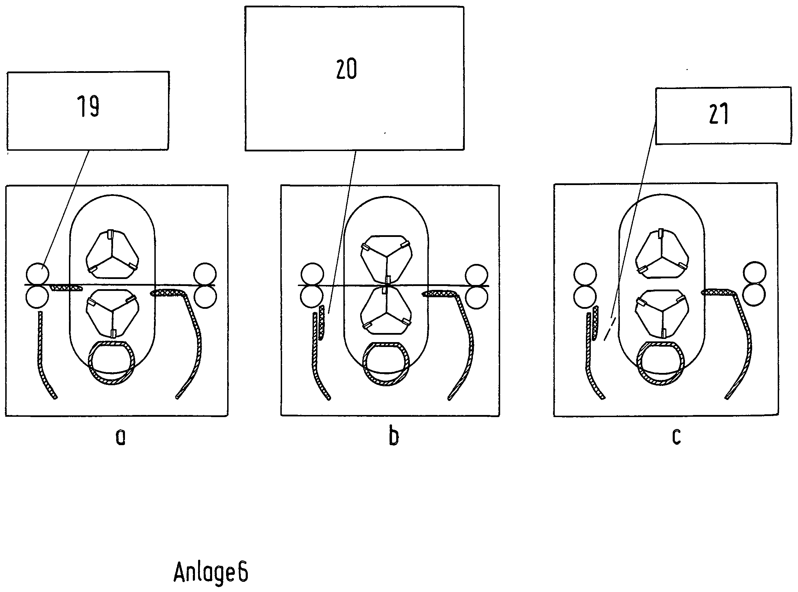

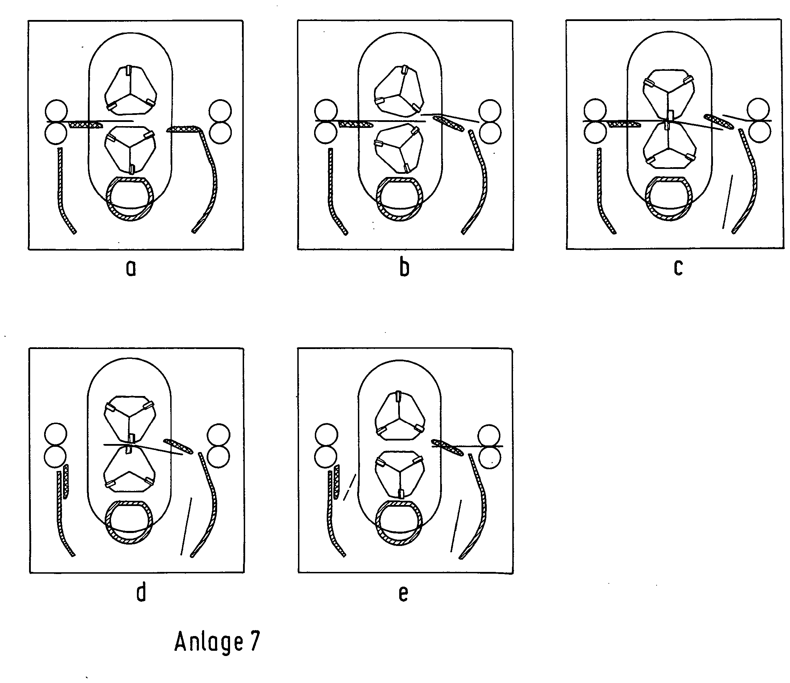

## Patentansprüche

1. Verfahren zum Abtrennen von Einzelstücken von einem aus einer Walzanlage kommenden Metallband mit einer Trommelschere (1), sowie dieser nachgeordneten Ableitungen für die abgetrennten Metallbandstücke, wobei am Auslauf des Metallbandes aus der Schere eine in die oder aus der Ebene des Metallbandes schwenkbare Weiche (8) vorgesehen ist, deren Schwenkwinkel in Abhängigkeit von der Art des abzutrennenden Metallbandstückes mit der Abführung dienenden Kanälen für Schrottstücke, Häckselstücke (16, 18) oder Schopfstücke (14) ausrichtbar ist oder zur Durchleitung des Kopfstückes des Metallbandes dient,
**dadurch gekennzeichnet,**
**dass** durch die schwenkbare Weiche (8) hinter der Trommelschere (1)
a) beim Schopfen am Materialkopf die Öffnung in den Schrottkanal (6, 11) verringert wird und der neue Bandkopf über den Schrottkanal (6, 11) zum Durchlaufbetrieb geleitet wird,
b) beim Häckseln die Öffnung über den Schrottkanal (6, 11) vergrößert und das Häckselstück nach unten in den Schrottkanal geleitet wird, wobei bei Einleitung eines Häckselvorgangs bei durchlaufendem Material nach dem ersten Schnitt die Geschwindigkeit des einlaufenden Materials verringert oder die Geschwindigkeit des auslaufenden Materials erhöht und damit eine Lücke gezogen wird,
c) nach Abschluss des Häckselvorganges durch Verringerung der Öffnung des Schrottkanals (6, 11) der neue Bandkopf wieder über den Schrottkanal zum Durchlaufbetrieb geleitet wird.

2. Verfahren nach Anspruch 1,
**dadurch gekennzeichnet,**
**dass** aus einem durchlaufenden Materialstrang Material herausgeschnitten wird, wobei hierzu der durchlaufende Materialstrang aufgetrennt wird und Häckselstücke herausgeschnitten werden und der neue Materialkopf wieder im Durchlaufbetrieb weitergeleitet wird.

3. Verfahren nach Anspruch 2,
**dadurch gekennzeichnet,**
**dass** der Materialstrang bis zum Ende gehäckselt wird.

4. Verfahren nach einem der vorstehenden Ansprüche,
**dadurch gekennzeichnet,**
**dass** die Verringerung der Öffnung des Schrottkanals dynamisch in zeitlicher Abhängigkeit vom Schnittvorgang erfolgt, wobei die Verringerung der Öffnung erfolgt, sobald der Anfang des Häckselstückes die Weichenzunge passiert hat und bevor der neue Materialanfang die Weiche erreicht.

## Claims

1. Method for separating off individual pieces from a metal strip, which comes from a rolling installation, by drum shears (1), as well as discharge means downstream thereof for the separated metal strip pieces, wherein a diverter (8) pivotable into or out of the plane of the metal strip is provided at the outlet of the metal strip from the shears, wherein depending on the kind of metal strip pieces to be separated the pivot angle of the diverter is alignable with channels, which serve for conducting away, for pieces of scrap, chopped pieces (16, 18) or croppings (14), or serves for conducting through the head piece of the metal strip,
**characterised in that**
through the pivotable diverter (8) behind the drum shears (1)
a) in the case of cropping at the material head the opening in the scrap channel (6, 11) is reduced and the new strip head is conducted via the scrap channel (6, 11) for transiting operation,
b) in the case of chopping, the opening via the scrap channel (6, 11) is enlarged and the chopped piece is conducted downwardly into the scrap channel, wherein on initiation of a chopping process, with transiting material, after the first cut the speed of the entering material is reduced or the speed of the exiting material is increased and thus a gap is created,
c) after the end of the chopping process, through reducing the opening of the scrap channel (6, 11) the new strip head is further conducted via the scrap channel for transiting operation.

2. Method according to claim 1, **characterised in that** material is cut out from a transiting material strip, wherein for that purpose the transiting material strip is divided up and chopped pieces are cut out and the new material head is again passed on in transiting operation.

3. Method according to claim 2, **characterised in that** the material strip is chopped as far as the end.

4. Method according to any one of the preceding claims, **characterised in that** the reduction of the opening of the scrap channel is carried out dynamically in time dependence on the cutting process, wherein the reduction of the opening is carried out as soon as the start of the chopped piece has passed the diverter tongue and before the new material start reaches the diverter.

## Revendications

1. Procédé pour la séparation d'éléments individuels à partir d'une bande métallique sortant d'une installation de laminage comprenant une cisaille à tambour (1), ainsi que des dérivations montées à la suite de cette dernière, pour les éléments séparés de la bande métallique ; dans lequel, à la sortie de la bande métallique à l'extérieur de la cisaille, on prévoit un aiguillage (8) apte à pivoter dans le plan ou à l'extérieur du plan de la bande métallique, dont l'angle de pivotement peut être orienté, en fonction du type de l'élément de bande métallique à séparer, avec des canaux faisant office de dérivation, pour des éléments destinés à la ferraille, pour des éléments destinés au hachage (16, 18) ou des éléments destinés à l'éboutage (14) ou sert à l'acheminement de l'élément de tête de la bande métallique ; **caractérisé en ce que**, par l'intermédiaire de l'aiguillage (8) apte à pivoter, à l'arrière de la cisaille à tambour (1)
a) dans le cas d'un éboutage, à la tête de la matière, l'ouverture menant dans le canal destiné à la ferraille (6, 11) est réduite et la nouvelle tête de bande est guidée à travers le canal (6, 11) destiné à la ferraille pour le fonctionnement en continu ;
b) dans le cas d'un hachage, l'ouverture via le canal destiné à la ferraille (6, 11) est agrandie et l'élément destiné au hachage est guidé vers le bas jusque dans le canal destiné à la ferraille ; dans lequel lors du lancement d'un processus de hachage dans le cas d'une matière de passage après la première découpe, la vitesse de la matière entrante est soumise à une réduction ou la vitesse de la matière sortante est soumise à une élévation, d'une manière telle que l'on ménage un vide ;
c) au terme du processus de hachage, par l'intermédiaire de la réduction de l'ouverture du canal (6, 11) destiné à la ferraille, la nouvelle tête de bande est à nouveau guidée à travers le canal destiné à la ferraille, à des fins de fonctionnement en continu.

2. Procédé selon la revendication 1, **caractérisé en ce que**, à partir d'une barre de matière coulée en continu, on découpe de la matière ; dans lequel, on sépare à cet effet la barre de matière coulée en continu et on en découpe à cet effet des éléments destinés au hachage et on poursuit le guidage de la nouvelle tête de matière à nouveau dans le fonctionnement en continu.

3. Procédé selon la revendication 2, **caractérisé en ce que** la barre de matière coulée en continu est hachée jusqu'au bout.

4. Procédé selon l'une quelconque des revendications précédentes, **caractérisé en ce que** la réduction de l'ouverture du canal destiné à la ferraille a lieu de manière dynamique en fonction, dans le temps, du processus de découpe ; dans lequel la réduction de l'ouverture a lieu dès que le début de l'élément destiné au hachage est passé par la lame d'aiguillage et avant que le nouveau début de matière n'atteigne l'aiguillage.
